# EUROPÄISCHE PATENTSCHRIFT

(11) **EP 3 530 825 B1**
(45) Veröffentlichungstag und Bekanntmachung des Hinweises auf die Patenterteilung: **17.11.2021**
(21) Anmeldenummer: 18212627.6
(22) Anmeldetag: 14.12.2018
(51) Int. Cl.: E03D 11/14, H02G 3/08

(54) **SANITÄRINSTALLATION**
SANITARY INSTALLATION
INSTALLATION SANITAIRE

(30) Priorität: 22.02.2018 EP 18158131
(43) Veröffentlichungstag der Anmeldung: 28.08.2019
(73) Patentinhaber: Geberit International AG, 8645 Jona (CH)
(72) Erfinder: GREMLICH, Lukas, 8645 Jona (CH)
(74) Vertreter: Frischknecht, Harry Ralph

(56) Entgegenhaltungen:
- EP-A1- 2 067 901
- WO-A1-2015/042726
- CA-A1- 2 827 827
- CH-A5- 677 989
- DE-B- 1 231 331
- US-A- 3 701 448
- US-A- 4 778 399
- US-A- 5 574 256
- US-A- 6 162 071
- US-A1- 2010 051 308
- US-A1- 2016 294 172
- US-A1- 2017 207 614

## Beschreibung

### TECHNISCHES GEBIET

Die vorliegende Erfindung betrifft eine Sanitärinstallation nach Anspruch 1.

### STAND DER TECHNIK

Die Badezimmerfunktionen sind in jüngerer Vergangenheit komplexer geworden. Beispielhaft seien Dusch-WCs oder Toiletten mit Geruchsabsaugung genannt. Die zusätzlichen Funktionen benötigen eine entsprechende Stromversorgung. Beispielsweise für die Steuerung des Dusch-WC oder für einen Lüftermotor.

Oftmals fehlen allerdings Steckdosen und Stromanschlüsse in Badezimmern, welche einen Sanitärartikel mit Strom versorgen könnten. Es besteht daher ein Bedürfnis, Elektroanschlüsse in der Nähe von oder sogar am Montagerahmen vorzusehen.

Aus der EP 2 568 089 A1 ist eine WC-Anschlussvorrichtung in Form eines Montageralunens für ein Dusch-WC bekannt, welche über eine elektrische Anschlusseinrichtung sowie eine Duschwasser-Anschlusseinrichtung verfügt. Bei der elektrischen Anschlusseinrichtung handelt es sich um eine Bohrung im Montagerahmen, durch welche eine elektrische Verbindung des Dusch-WCs mit einem sich hinter dem Montagerahmen befindlichen Elektroanschluss ermöglicht wird.

Nachteilig bei solchen Vorrichtungen ist jedoch, dass die Installation und/oder die Wartung eines Dusch-WCs Fachkräfte aus unterschiedlichen Gewerben bzw. Gewerken benötigt.

Aus der EP 2 067 901 A ist eine Sanitärinstallation mit einem Montagerahmen bekannt. An der Traverse des Rahmens ist eine Duscheinheit befestigt, die einen elektrischen Steckanschluss aufweist.

### DARSTELLUNG DER ERFINDUNG

Ausgehend von diesem Stand der Technik liegt der Erfindung eine Aufgabe zugrunde, eine Sanitärinstallation mit einer Elektrodose der eingangs genannten Art anzugeben, welche einfacher zu installieren und deren Wartung einfacher ist. Insbesondere ist es eine Aufgabe der vorliegenden Erfindung, die Sanitärinstallation mit Elektrodose so auszubilden, dass diese von einem Sanitärinstallateur gewartet werden kann.

Diese Aufgabe löst der Gegenstand von Anspruch 1. Demgemäss umfasst eine Sanitärinstallation für einen Sanitärartikel, insbesondere ein WC oder Dusch-WC,
- ein Montagerahmen;
- eine Spülrohr-Aufnahme zur Aufnahme eines Spülrohrs zum Zuleiten von Spülwasser in den Sanitärartikel;
- ein Befestigungsmittel zur Aufnahme und Befestigung eines Abflussrohrs zum Ableiten von Abwasser aus dem Sanitärartikel am Montagerahmen; und
- mindestens eine erste und eine zweite Befestigungseinrichtung zur Befestigung des Sanitärartikels am Montagerahmen.

Die Spülrohr-Aufnahme, das Befestigungsmittel sowie die erste und zweite Befestigungseinrichtung einen Zwischenraum definieren, wobei eine Elektrodose zur Stromversorgung des Sanitärartikels im Zwischenraum angeordnet ist.

Die Elektrodose der erfindungsgemässen Sanitärinstallation umfasst ein Gehäuse mit einem Innenraum, der über eine Frontöffnung zugänglich ist, eine im Innenraum liegende Trennwand, welche den Innenraum in einen ersten Raumbereich und einen zweiten Raumbereich aufteilt. In der Trennwand ist mindestens ein elektrisches Kontaktelement angeordnet, welches eine zum ersten Raumbereich zugewandte erste Anschlussstelle zum Anschluss an eine gebäudeseitige Elektroinstallation, wie eine Starkstrominstallation und/oder eine Gebäudeleittechnikinstallation aufweist, und welches eine zum zweiten Raumbereich zugewandte zweite Anschlussstelle aufweist. Im zweiten Raumbereich ist weiterhin mindestens ein Elektroelement anordbar bzw. angeordnet, welches Elektroelement eine elektrische Schnittstelle aufweist, die mit der zweiten Anschlussstelle des elektrischen Kontaktelementes über eine Steckverbindung elektrisch verbindbar ist. Das Elektroelement ist über ein Leiterelement mit einem Sanitärartikel verbindbar.

Durch die Anordnung der Trennwand kann die erste Anschlussstelle physisch getrennt von der Steckverbindung zwischen der zweiten Anschlussstelle und dem Elektroelement angeordnet werden. Im Wartungsfall kann der Sanitärinstallateur vergleichsweise einfach das Elektroelement austauschen, weil keine Manipulation an der ersten Anschlussstelle erforderlich ist. Es ist lediglich erforderlich die Steckverbindung zwischen der zweiten Anschlussstelle und dem Elektroelement zu trennen bzw. herzustellen. Eine Mitarbeit durch den Elektroinstallateur oder den Gebäudeleittechniker ist daher nicht weiter erforderlich.

Vorzugsweise wird die erste Anschlussstelle bereits werkseitig mit einem Kabel vorkonfektioniert. Das heisst, die erste Anschlussstelle steht im ersten Raumbereich mit einem Kabel in Verbindung, welches dann an die infrastrukturseitige Elektroinstallation angeschlossen wird. Alternativerweise kann das Kabel auch vor Ort angeschlossen werden. Unabhängig davon bleibt nach der ersten Installation, welche aus regulatorischen Gründen durch den Elektroinstallateur erfolgen muss, der Vorteil, dass Wartungsarbeiten aufgrund der Zweiteilung des Innenraums und aufgrund der Steckverbindung zwischen Elektroelement und Kontaktelement durch den Sanitärinstallateur ohne Zuhilfenahme eines Elektroinstallateurs erfolgen kann. Mit anderen Worten wird die Elektrodose durch den Elektriker an die gebäudeseitige Elektroinstallation angeschlossen und anschliessend kann der Sanitärinstallateur die Montage fertigstellen und auch Wartungsarbeiten, beispielsweise ein Austauschen vom Elektroelement ohne Zuhilfenahme des Elektrikers durchführen.

Unter der Ausdrucksweise "Steckverbindung" wird eine mechanische Verbindung verstanden, welche durch relatives Verschieben des Elektroelementes auf das Kontaktelement zu hergestellt und welche durch relatives Verschieben des Elektroelementes vom Kontaktelement weg getrennt wird.

Vorzugsweise erstreckt sich die Trennwand vollständig quer durch den Innenraum. Unter der Ausdrucksweise, dass "die Trennwand sich vollständig durch den Innenraum hindurch erstreckt" wird verstanden, dass sich die Trennwand über den vollständigen Querschnitt des Innenraums erstreckt. In anderen Ausfiihrungsformen erstreckt sich die Trennwand nur teilweise durch den Innenraum. Bei allen Ausführungsformen wird die einzige Durchdringung der Trennwand im Wesentlichen durch das elektrische Kontaktelement bereitgestellt. Ansonsten gibt es vorzugsweise keine Verbindung zwischen den beiden Raumbereichen. Das heisst, dass die beiden Raumbereiche bevorzugt vollständig voneinander getrennt sind.

Die Starkstrominstallation ist typischerweise eine Elektroinstallation eines Gebäudes, welche mit einer Spannung von grösser als 100 Volt betrieben wird. Die Gebäudeleittechnikinstallation wird mit einer geringeren Spannung betrieben.

In einer ersten Variante ist das Kontaktelement in einer Durchgangsöffnung in der Trennwand fest gelagert. Das Kontaktelement lässt sich während der Montage in die Durchgangsöffnung einsetzen und wird dann fest zur Trennband befestigt. Für die Festlegung kann eine mechanische und/oder stoffschlüssige Verbindung eingesetzt werden.

In einer zweiten Variante bildet das Kontaktelement einen integralen Bestandteil der Trennwand. Das heisst, dass Kontaktelement und Trennwand im Wesentlichen einstückig ausgebildet sind.

Vorzugsweise weist die zweite Anschlussstelle mehrere Anschlussbuchsen auf. Die Schnittstelle weist mehrere Anschlussstifte auf, welche in die Anschlussbuchsen einschiebbar sind.

Vorzugsweise sind jeweils drei Anschlussbuchsen und drei Anschlussstifte vorhanden, so dass Phase, Nullleiter und Erdung vorgesehen werden können. Die Anschlussbuchsen sind vorzugweise derart ausgebildet, dass die Buchsen von Hand nicht berührbar sind; insbesondere dass die Anschlussbuchsen elektrischen Normen entsprechen.

Vorzugsweise sind die Anschlussbuchsen mit einem Anschlussbuchsengehäuse umgeben. Die Anschlussstifte stehen vorzugweise vom Elektroelement freiliegend ab.

Als Alternative zu Anschlussbuchse und Anschlussstift können auch Flachkontakte eingesetzt werden. Das heisst, dass die zweite Anschlussstelle und die Schnittstelle als Flachkontakte ausgebildet sind, wobei vorzugsweise einer der Flachkontakte durch ein gefedertes Kontaktelement bereitgestellt wird.

Vorzugsweise ist die Trennwand in den Innenraum einsetzbar ist. Das heisst, die Trennwand ist ein vom Gehäuse separat ausgebildetes Element, welches in den Innenraum einsetzbar ist.

Die in den Innenraum einsetzbare Trennwand hat den Effekt, dass der zweite Raumbereich umseitig vollständig abgeschlossen werden kann. Dies hat den Vorteil, dass wenn die Elektrodose montiert ist, kein Zugriff auf den ersten Raumbereich möglich ist.

Alternativ zur einsetzbaren Trennwand kann die Trennwand auch als einen integralen Bestandteil des Gehäuses ausgebildet sein. Die integrale Ausbildung der Trennwand hat den Vorteil, dass das Gehäuse vergleichsweise einfach herstellbar ist.

Besonders bevorzugt wird die Trennwand durch einen über eine Frontöffnung in den Innenraum einsetzbaren Einsatz bereitgestellt. Der Einsatz kann über die Frontöffnung in den Innenraum eingeschoben werden und kommt so in den Innenraum des Gehäuses zu liegen.

Vorzugsweise weist der Einsatz mindestens einen Distanzhalteabschnitt auf, welcher von der Trennwand absteht. Der Distanzhalteabschnitt kommt mit einer gegenüber der Frontöffnung liegenden Wandung des Gehäuses in Kontakt. Zwischen der Wandung des Gehäuses und der Trennwand wird der besagte erste Raumbereich geschaffen. Zwischen der Frontöffnung und der Trennwand wird der besagte zweite Raumbereich geschaffen.

Durch den Einsatz kann sehr einfach die besagte Trennwand in den Innenraum eingesetzt werden. Durch den Distanzhalteabschnitt wird sichergestellt, dass die Trennwand immer am gleichen Ort liegt.

Vorzugsweise weist der Distanzhalteabschnitt die Struktur einer Wandung auf, welche Wandung, vorzugsweise mindestens, einen Durchbruch aufweist, der mit mindestens einer Durchgangsöffnung am Gehäuse passend angeordnet sind.

Der Durchbruch und die Durchgangsöffnung sind derart passend zueinander angeordnet, dass ein Kabel oder eine ähnliche Anschlussstruktur aus dem ersten Raumbereich nach aussen geführt werden kann, so dass das Kabel bzw. die ähnliche Anschlussstruktur an die gebäudeseitige Elektroinstallation anschliessbar ist.

Der Durchbruch durchdringt die Wandung und kann auch als Freischnitt bezeichnet werden.

Vorzugsweise steht von der Trennwand in Richtung des zweiten Raumbereichs eine weitere Wandung ab, welche die Trennwand mindestens teilweise umgibt.

Mit der weiteren Wandung wird ein Element geschaffen, welches für die Lagerung des Elektroelementes oder für die Lagerung von zum Elektroelement gehörenden Teilen, wie Kabel, dient.

Vorzugsweise weist die weitere Wandung mindestens ein Aufnahmeelement zur Aufnahme von mit dem Elektroelement zu verbindenden elektrischen Elementen, wie beispielsweise Kabel, auf.

Vorzugsweise ist an der ersten Anschlussstelle ein Kabel vorgesehen, welches mit der ersten Anschlussstelle in fester elektrischer Verbindung steht und über die mindestens eine Durchgangsöffnung aus dem Gehäuse hinausgeführt wird und ausserhalb des Gehäuses mit der gebäudeseitigen Elektroinstallation verbindbar ist. Bei grösseren Toilettenanlagen ist es zudem denkbar, dass die Kabel von zwei benachbarten Sanitärartikeln von Elektrodose zu Elektrodose geführt werden.

Die einzelnen Litzen des Kabels werden kraftschlüssig und/oder stoffschlüssig mit der ersten Anschlussstelle verbunden.

Die erste Anschlussstelle ist vorzugsweise eine Anschlussklemme, welcher Klemmelemente aufweist, die mit den Litzen über eine Klemmverbindung verbindbar sind.

Das Elektroelement ist vorzugsweise ein Netzteil, ein Transformator, eine Batterie, ein Kommunikationselement, oder ein mit der Gebäudeleittechnik zusammenarbeitendes Element. Es können aber auch verschiedene der eben aufgezählten oder andere Elektroelemente an bzw. in einem einzigen Elektroelement integriert sein.

In einer Weiterbildung der vorliegenden Erfindung ist es grundsätzlich denkbar, dass mehr als ein Elektroelement angeordnet ist, wobei die Elektroelemente unterschiedlicher Gattung sein können. Vorzugsweise ist die Zahl der Elektroelemente gleich zur Zahl der Kontaktelemente.

Vorzugsweise weist das Gehäuse aussenseitig mindestens ein Rastelement auf, mit welchem das Gehäuse mit der Sanitärinstallation, insbesondere mit einem Montagerahmen verbindbar ist.

Vorzugsweise ist das mindestens eine Rastelement oberseitig am Gehäuse angeordnet, so dass die Elektrodose aufhängbar ist.

Vorzugsweise weist das Gehäuse an einer ihrer Seitenwände eine Einbuchtung auf, die derart ausgebildet ist, dass Raum für die Durchführung eines Abflussrohrs der Sanitärinstallation geschaffen wird.

Vorzugsweise ist die Einbuchtung konkav gerundet. Die Einbuchtung erstreckt sich dabei in das Gehäuse hinein und verkleinert den Querschnitt bzw. das Volumen des Innenraums.

Vorzugsweise liegt die Einbuchtung mittig zwischen zwei gegenüberliegenden Seitenwänden des Gehäuses.

Die Seitenwand, in welcher die Einbuchtung liegt, ist aussenseitig vorzugsweise derart ausgebildet, dass keine Elemente von der Seitenwand abstehen.

Vorzugsweise erstreckt sich die Einbuchtung im Wesentlichen entlang einer Hauptrichtung, welche Hauptrichtung quer zur Trennwand liegt.

Vorzugsweise ist die Elektrodose bezüglich ihrer Grösse dadurch charakterisiert, dass diese rechtwinklig auf die Frontöffnung gesehen eine Breite aufweist, die mindestens 1.5 mal grösser als die Höhe ist; und/oder dass die Elektrodose eine Tiefe aufweist, die kleiner als die Breite und/oder grösser als die Höhe ist.

Vorzugsweise ist die Elektrodose als flache Dose ausgebildet, so dass die Elektrodose in ihrer Höhe nur einen sehr geringen Teilbereich in einem Montagerahmen einnimmt.

Vorzugsweise ist der Zwischenraum durch zwei senkrechte Ebenen, welche in Einbaulage senkrecht durch die erste beziehungsweise zweite Befestigungseinrichtung verlaufen, und durch zwei horizontale Ebenen, welche in Einbaulage horizontal durch die Spülrohr-Aufnahme beziehungsweise das Befestigungsmittel verlaufen, definiert.

Mit anderen Worten gesagt kann der Zwischenraum durch zwei senkrechte Ebenen, welche sich entlang der Mittellinien der Montageöffnungen erstrecken, und durch zwei horizontale Ebenen, welche orthogonal zu diesen senkrechten Ebenen stehen und horizontal durch die Spülrohr-Aufnahme und das Befestigungsmittel verlaufen, definiert werden.

Vorzugsweise ist der Zwischenraum derart angeordnet, dass er im Einbauzustand des Montagerahmens frei zugänglich ist, und wobei der Zwischenraum im Einbauzustand, im Falle eines mit dem Montagerahmen verbundenen Sanitärartikels, vorzugsweise durch den Sanitärartikel überdeckt wird.

Wie oben bereits erläutert wurde, ist es bevorzugt die Elektrodose nach deren Befestigung am Montagerahmen frei zugänglich zu belassen. Folglich wird auch der Zwischenraum, in welchem die Elektrodose angeordnet wird, weder verkleidet noch verputzt. Indem der Zwischenraum dabei durch die Spülrohr-Aufnahme, das Befestigungsmittel sowie die erste und zweite Befestigungseinrichtung begrenzt wird, verfügt er über Dimensionen, die bei einem am Montagerahmen befestigen Sanitärartikel von diesem überdeckt werden. So können sowohl ästhetischen als auch praktische Anforderungen gleichzeitig erfüllt werden.

Vorzugsweise ist das Befestigungsmittel eine Rohrschelle, welche mit dem Montagerahmen in Verbindung steht.

Der Montagerahmen wird typischerweise hinter einer Vorwand angeordnet. Die Vorwand weist dabei einen Durchbruch auf, so dass die Elektrodose zugänglich ist. Die Elektrodose ist mit ihrer Frontöffnung gegen die Rückseite der Vorwand orientiert, so dass die Frontöffnung durch den Durchbruch zugänglich ist. Vorzugsweise wird der Durchbruch durch den mit dem Montagerahmen in Verbindung stehenden Sanitärartikel überdeckt, wodurch durch Entfernen des Sanitärartikels Zugang zur Elektrodose geschaffen wird.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Explosionsdarstellung einer Elektrodose für eine Sanitärinstallation;
- Fig. 2: eine weitere perspektivische Explosionsdarstellung einer Elektrodose nach Figur 1;
- Fig. 3: eine Schnittdarstellung durch die Elektrodose nach den Figuren 1 und 2;
- Fig. 4: eine perspektivische Ansicht einer Elektrodose nach den vorhergehenden Figuren mit einer Sanitärinstallation in der Form eines Montagerahmens; und
- Fig. 5: eine weitere perspektivische Ansicht der Figur 4.

### BESCHREIBUNG BEVORZUGTER AUSFÜHRUNGSFORMEN

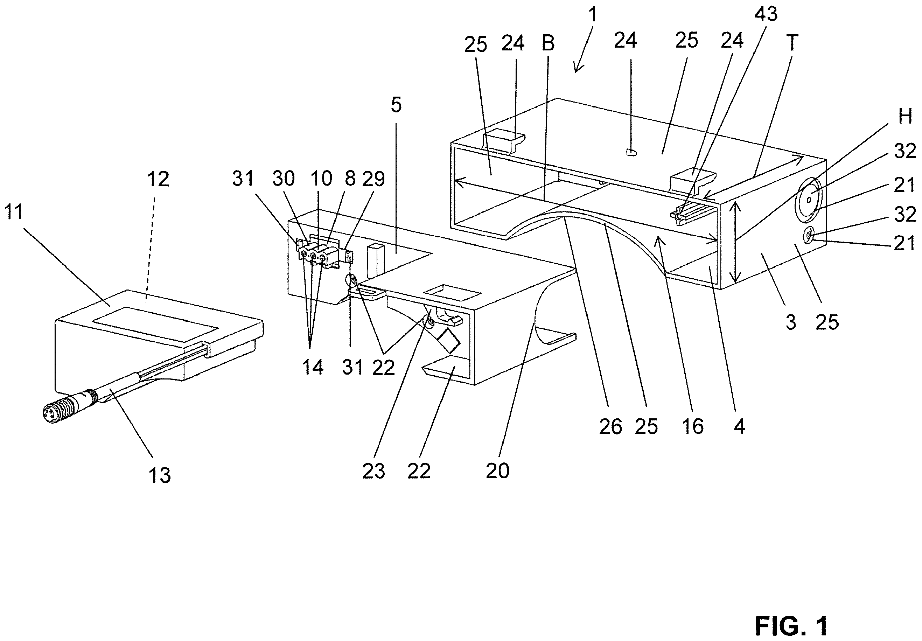

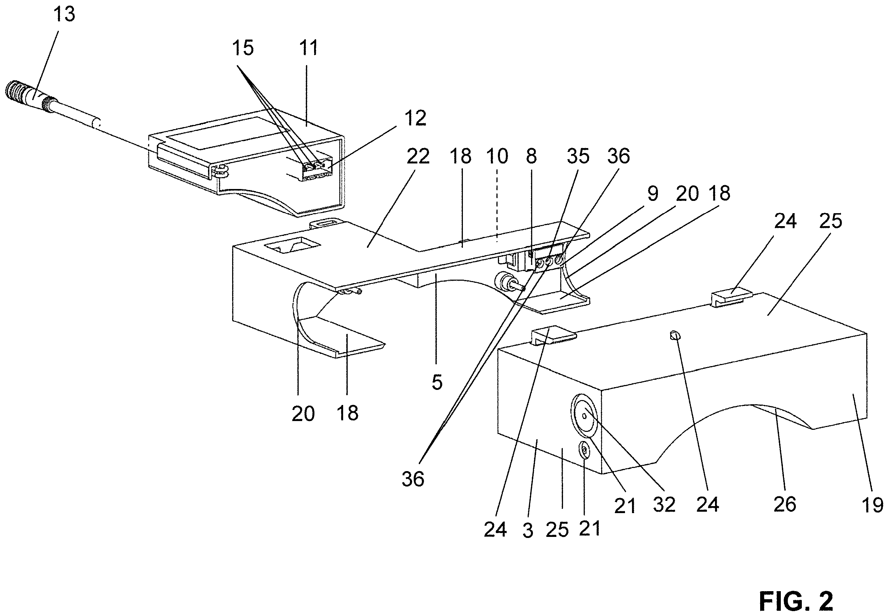

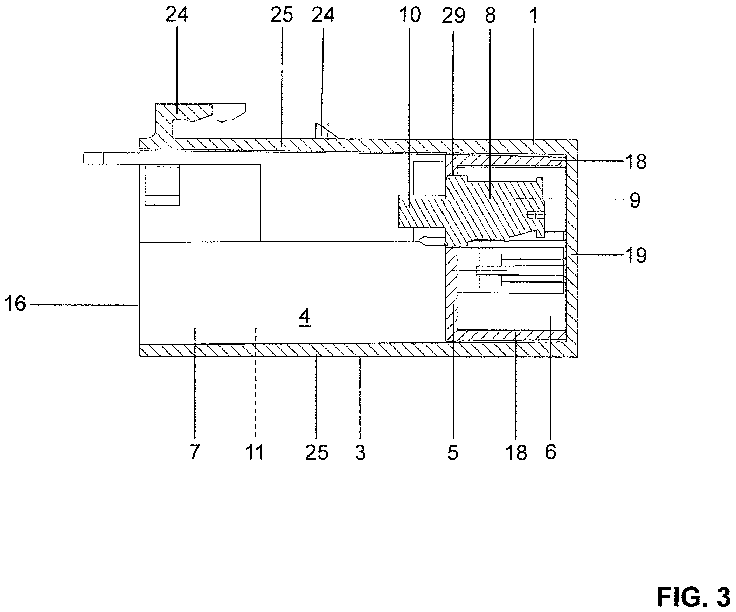

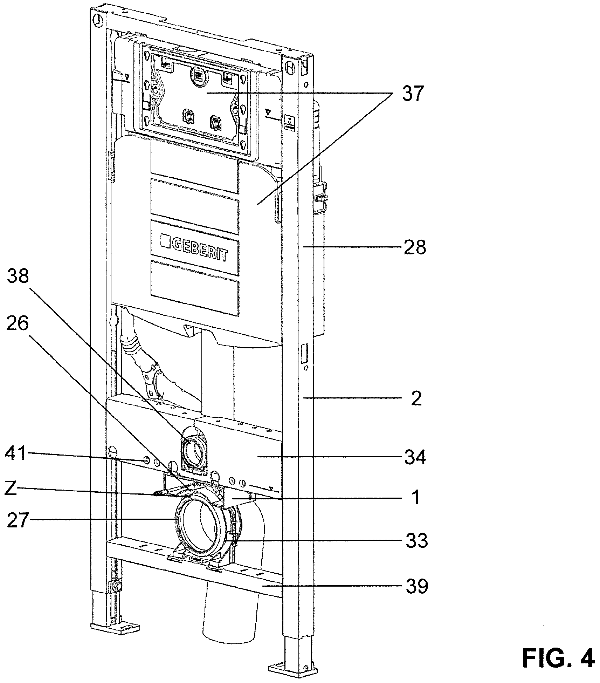

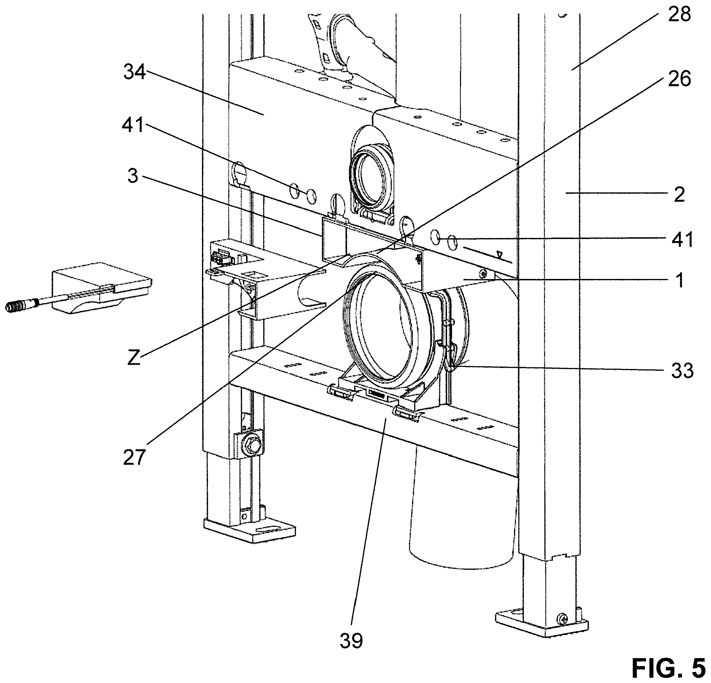

In den Figuren 1 bis 2 werden Explosionsansichten einer Elektrodose 1 einer erfindungsgemässen Sanitärinstallation 2 gezeigt. In der Figur 3 wird eine Schnittdarstellung der Elektrodose 1 gezeigt. Die Figuren 4 und 5 zeigen die Elektrodose 1 im Zusammenhang mit einer erfindungsgemässen Sanitärinstallation 2, die einen Montagerahmen aufweist. Die Elektrodose 1 dient der Versorgung eines Sanitärartikels, der an die Sanitärinstallation 2 montiert werden kann, mit elektrischer Energie oder mit Steuerungssignalen. Der Sanitärartikel kann ein beliebiger Sanitärartikel sein. Beispielsweise wird hier ein Dusch-WC, ein Spülsystem, ein Waschtisch oder eine Auslaufarmatur genannt.

Unter Bezugnahme auf die Figuren 1 bis 3 wird nun der Aufbau der Elektrodose 1 erläutert. Die Elektrodose 1 umfasst ein Gehäuse 3 mit einem Innenraum 4, der über eine Frontöffnung 16 zugänglich ist, und eine im Innenraum 4 liegende Trennwand 5, welche sich vollständig quer durch den Innenraum 4 erstreckt und den Innenraum 4 in einen ersten Raumbereich 6 und einen zweiten Raumbereich 7 aufteilt. Die Aufteilung der beiden Raumbereiche 6, 7 kann in der Schnittdarstellung der Figur 3 gut erkannt werden.

In der Trennwand 5 ist mindestens ein elektrisches Kontaktelement 8 angeordnet. Das elektrische Kontaktelement 8 weist eine zum ersten Raumbereich 6 zugewandte erste Anschlussstelle 9 auf. Weiter weist das elektrische Kontaktelement 8 eine zum zweiten Raumbereich 7 zugewandte zweite Anschlussstelle 10 auf.

Die erste Anschlussstelle 9 dient dem Anschluss des elektrischen Kontaktelementes 8 an eine gebäudeseitige Elektroinstallation, wie beispielsweise Starkstrominstallation oder eine Gebäudeleittechnikinstallation. Die gebäudeseitige Elektroinstallation wird in den Figuren nicht dargestellt. Im zweiten Raumbereich 7 ist weiterhin mindestens eine Elektroelement 11 angeordnet. Das Elektroelement 11 ist vorzugsweise ein Netzteil oder ein Transformator oder eine Batterie oder eine Kommunikationselement oder ein mit der Gebäudeleittechnik zusammenarbeitendes Element. Das Elektroelement 11 weist eine elektrische Schnittstelle 12 auf, die mit der zweiten Anschlussstelle 10 des elektrischen Kontaktelementes 8 über eine Steckverbindung elektrisch verbindbar ist. Die Steckverbindung kann durch eine lineare Bewegung zwischen Elektroelement 11 und Kontaktelement 8 hergestellt bzw. getrennt werden. Hierbei wird das Elektroelement 11 in den zweiten Raumbereich 7 eingeschoben bzw. herausbewegt.

Das Elektroelement 11 ist über ein Leiterelement 13 mit einem Sanitärartikel verbindbar. Das Leiterelement 13 ist hier als Kabel dargestellt. Das Leiterelement 13 kann aber auch eine drahtlose Verbindung sein.

Die erste Anschlussstelle 9, welche zum Anschluss an die gebäudeseitige Elektroinstallation ausgebildet, weist in der gezeigten Ausführungsform die Gestalt einer Anschlussklemme 35 mit mehreren Klemmabschnitten 36 auf. Dabei können einzelne Litzen eines Kabels mit den Klemmabschnitten 36 verbunden werden. Die Litzen werden dann zum Kontaktelement 8 entsprechend mechanisch geklemmt. Diese Klemmung kann entweder werkseitig vorbereitet werden oder aber bauseitig direkt vor Ort durch den Elektriker vorgenommen werden. Die zweite Anschlussstelle 10 umfasst in der gezeigten Ausfuhrungsform mehrere Anschlussbuchsen 14. Die Schnittstelle 12 auf Seiten des Elektroelementes 11 weist die Form von Anschlussstiften 15 auf. Die Anschlussstifte 15 können dabei bei der Herstellung der Steckverbindung in die Anschlussbuchsen 14 eingeführt werden. Die Anschlussbuchsen 14 sind in der gezeigten Ausführungsform von einem Anschlussgehäuse 30 umgeben. Das Anschlussdosengehäuse 30 ist Teil des elektrischen Kontaktelementes 8.

Sobald nun das Kontaktelement 8 über die erste Anschlussstelle 9 mit der gebäudeseitigen Elektroinstallation in Verbindung steht, ist ein problemloser Einbau des Elektroelementes 11 aufgrund der Steckverbindung zwischen Elektroelement 11 und dem Kontaktelement 8 möglich. Gleiches gilt für den Austausch in einem Wartungsfall. Da es jedermann möglich ist, eine Steckverbindung herzustellen bzw. zu trennen, kann dies vom Benutzer selbst oder vom Sanitärinstallateur ohne Zuhilfenahme eines Elektrikers vorgenommen werden.

In der gezeigten Ausführungsform ist das Kontaktelement 8 in einer Durchgangsöffnung 29 in der Trennwand fest gelagert. Das Kontaktelement 8 kann dabei verschiedenartig gelagert sein. In der gezeigten Ausführungsform wird ein Rastelement 31 gezeigt. Alternativerweise kann das Kontaktelement 8 auch anderweitig mechanisch und/oder stoffschlüssig mit der Trennwand 5 verbunden werden. In andern, nicht gezeigten Ausführungsformen, wäre es auch denkbar, dass das Kontaktelement 8 einen integralen Bestandteil der Trennwand 5 bildet.

In der gezeigten Ausführungsform ist die Trennwand 5 in den Innenraum 4 einsetzbar. Das heisst, die Trennwand kann in den Innenraum 4 bei der Montage eingesetzt werden. Die Trennwand 5 erstreckt sich dabei über den vollständigen Querschnitt des Innenraums 4, so dass die beiden Raumbereiche 6, 7 voneinander getrennt sind. Das heisst, ein Benutzer hat keinen Zugang zum zweiten Raumbereich 7, wenn die Trennwand 5 im Innenraum 4 liegt. Dies betrifft insbesondere der Zugang vom ersten Raumbereich 6 her gesehen. Die Trennwand 5 wird über Schrauben, welche durch Schraubenlöcher 42 an der Trennwand 5 hindurchgeführt werden und in Gewinde 43 eingreifen, im Innenraum gehalten.

Die Trennwand 5 ist hier durch einen über die Frontöffnung 16 in den Innenraum einsetzbaren Einsatz 17 bereitgestellt. Der Einsatz 17 kann über die Frontöffnung 16 in den Innenraum 4 eingesetzt werden. Der Einsatz 17 weist einen Distanzhalteabschnitt 18, hier in der Gestalt von Wandungen, auf, welcher von der Trennwand 5 absteht. Der Distanzhalteabschnitt 18 kommt, wie in der Figur 3 gezeigt, mit einer der gegenüber der Frontöffnung 16 liegenden Wandung 19 des Gehäuses 3 in Kontakt. Der Distanzhalteabschnitt 18 hält dabei die Trennwand 5 in einem Abstand zur besagten Wandung 19. Zwischen der Wandung 19 des Gehäuses 3 und der Trennwand 5 wird der besagte erste Raumbereich 6 geschaffen. Der erste Raumbereich 6 ist vorzugsweise ein umseitig im Wesentlichen geschlossener Raumbereich. Der erste Raumbereich 6 wird dabei in der gezeigten Ausführungsform durch die Wandung 19 des Gehäuses 3 und durch Seitenwände 25 des Gehäuses 3 sowie durch die Trennwand 5 entsprechend begrenzt.

Der Distanzhalteabschnitt 18 weist in der gezeigten Ausführungsform die Form einer Wandung auf, welche von der Trennwand 5 absteht. Die Wandung weist dabei ein mindestens einen Durchbruch 20 auf, der mit mindestens einer Durchgangsöffnung 21 am Gehäuse 3 übereinstimmend angeordnet ist. Vorzugsweise sind im Gehäuse 3 mehrere Durchgangsöffnungen 21 angeordnet, so dass die Kabel an verschiedenen Orten in das Gehäuse 3 geführt werden können. Besonders bevorzugt sind an mindestens zwei gegenüberliegenden Seitenwänden 25 entsprechende Durchgangsöffnungen 21 angeordnet.

Die Durchgangsöffnung 21 ist hier mit einer Kabeltülle 32 versehen. Über die Durchgangsöffnung 21 bzw. die Kabeltülle 32 wird ein Kabel von aussen her in den ersten Raumbereich 6 eingeführt. Beim Kabel handelt es sich typischerweise um ein Netzkabel, welches mit der Starkstrominstallation in Verbindung steht, oder um ein Signalkabel, welches mit der Gebäudeleittechnik in Verbindung steht. Im ersten Raumbereich 6 wird dann das Kabel an die erste Anschlussstelle 9 des elektrischen Kontaktelementes 8 angeschlossen. In der gezeigten Ausführungsform sind zwei Durchgangsöffnungen 21 angeordnet. Es ist auch möglich, dass mehr oder weniger Durchgangsöffnungen 21 angeordnet sind. Beispielsweise wäre es in diesem Zusammenhang auch denkbar, dass über eine Durchgangsöffnung 21 das Starkstromkabel in den ersten Raumbereich 6 geführt wird und das über eine zweite Durchgangsöffnung 21 ein Signalkabel in den ersten Raumbereich 6 geführt wird.

Von der Trennwand 5 steht in Richtung des zweiten Raumbereichs 7 eine weitere Wandung 22 ab. Die weitere Wandung 22 umgibt die Trennwand 5 mindestens teilweise. Die weitere Wandung 22 weist in der gezeigten Ausführungsform weiter mindestens ein Aufnahmeelement 23 zur Aufnahme bzw. Befestigung von mit dem Elektroelement 11 zu verbindenden elektrischen Elementen, wie beispielsweise Kabel auf.

Aussenseitig weist das Gehäuse 3 mindestens ein Rastelement 24 auf. In der gezeigten Ausführungsform sind im Bereich der Frontöffnung 16 zwei Rastelemente 24 angeordnet. Mit dem mindestens einen Rastelement 24 ist das Gehäuse 3 mit einem Montagerahmen 28 der Sanitärinstallation 2 verbindbar.

Das Gehäuse 2 weist weiter an einer ihrer Seitenwände 25 eine Einbuchtung 26 auf. Die Einbuchtung 26 ist hier im unteren Bereich des Gehäuses 3 angeordnet. Die Einbuchtung 26 ist derart ausgebildet, dass Raum für die Durchführung eines Abflussrohrs 27 der Sanitärinstallation 2 geschaffen wird. Diese Durchführung kann in der Figur 4 gut erkannt werden. Das Abflussrohr 27 liegt dabei unterhalb des Gehäuses 3 und wird durch die Einbuchtung 26 hindurchgeführt. Diese Ausbildung hat den Vorteil, dass die der zur Verfügung stehende Raum optimal genutzt werden kann. Die Einbuchtung 26 ist in der gezeigten Ausführungsform mittig zwischen zwei gegenüberliegenden Seitenwänden 25 des Gehäuses 2 angeordnet. Weiter erstreckt sich die Einbuchtung in den Innenraum 4 hinein und verkleinert so den Innenraum 4. Die Einbuchtung hat hier Gestalt einer konkaven Krümmung.

Rechtwinklig auf die Frontöffnung 16 weist die Elektrodose eine Breite auf, welche mindestens 1,5-mal grösser ist als die Höhe H der Elektrodose. Weiter ist die Tiefe T der Elektrodose 1 hier kleiner als die Breite B und grösser als die Höhe H.

Die in den Figuren 4 und 5 gezeigte Sanitärinstallation 2 umfasst die oben beschriebene Elektrodose sowie einen Montagerahmen 28. Im Montagerahmen 28 ist hier ein Spülkasten mit einer Betätigungsstruktur 37 sowie das Abflussrohr 27 gelagert. Der Montagerahmen 28 kann aber auch der Aufnahme von anderen Elementen dienen. Die Elektrodose 1 liegt hier oberhalb des Abflussrohrs 27, welches sich durch die besagte Einbuchtung 26 hindurch erstreckt. Die Elektrodose 1 steht in der gezeigten Ausführungsform über die Rastelemente 24 mit einer Quertraverse 34 des Montagerahmens 28 in einer Rastverbindung. Die Quertraverse 34 dient hier weiter der Lagerung eines Spülrohrs 38. Das Abflussrohr 27 steht in der gezeigten Ausführungsform aber nicht mit der Elektrodose 1 in Verbindung, sondern wird über eine separat zu der Elektrodose 1 ausgebildete Rohrschellenanordnung 33 an einer Quertraverse 39 des Montagerahmens entsprechend mechanisch gehalten.

Die Elektrodose ist hier in einem Zwischenraum Z oberhalb des Abflussrohrs 27 angeordnet. Der Zwischenraum Z durch zwei senkrechte Ebenen, welche senkrecht durch die erste beziehungsweise zweite Befestigungseinrichtung 41 verlaufen, und durch zwei horizontale Ebenen, welche horizontal durch die Spülrohr-Aufnahme beziehungsweise das Befestigungsmittel 40 verlaufen, definiert.

Der Zwischenraum Z liegt vorzugsweise derart, dass dieser durch einen mit dem Montagerahmen verbundenen Sanitärartikel überdeckt ist. Bei Wartungsarbeiten kann der Sanitärartikel entsprechend entfernt werden, wodurch der Zugang zum Zwischenraum Z und der darin liegenden Elektrodose geschaffen wird.

**BEZUGSZEICHENLISTE**

| | | | |
|---|---|---|---|
| 1 | Elektrodose | 29 | Durchgangsöffnung |
| 2 | Sanitärinstallation | 30 | Anschlussgehäuse |
| 3 | Gehäuse | 31 | Rastelement |
| 4 | Innenraum | 32 | Kabeltülle |
| 5 | Trennwand | 33 | Rohrschellenanordnung |
| 6 | erster Raumbereich | 34 | Quertraverse |
| 7 | zweiter Raumbereich | 35 | Anschlussklemme |
| 8 | elektrisches Kontaktelement | 36 | Klemmabschnitte |
| 9 | erste Anschlussstelle | 37 | Spülkasten mit |
| 10 | zweite Anschlussstelle | | Betätigungsstruktur |
| 11 | Elektroelement | 38 | Spülrohr |
| 12 | elektrische Schnittstelle | 39 | Quertraverse |
| 13 | Leiterelement | 40 | Befestigungsmittel |
| 14 | Anschlussbuchsen | 41 | Befestigungseinrichtung |
| 15 | Anschlussstifte | 42 | Schraubenlöcher |
| 16 | Frontöffnung | 43 | Gewinde |
| 17 | Einsatz | B | Breite |
| 18 | Distanzhalteabschnitt | H | Höhe |
| 19 | Wandung | T | Tiefe |
| 20 | Durchbruch | Z | Zwischenraum |
| 21 | Durchgangsöffnung | | |
| 22 | weitere Wandung | | |
| 23 | Aufnahmeelement | | |
| 24 | Rastelement | | |
| 25 | Seitenwand | | |
| 26 | Einbuchtung | | |
| 27 | Abflussrohr | | |
| 28 | Montagerahmen | | |

## Patentansprüche

1. Sanitärinstallation (2) für einen Sanitärartikel, insbesondere ein WC oder Dusch-WC, umfassend:
- ein Montagerahmen (28);
- eine Spülrohr-Aufnahme zur Aufnahme eines Spülrohrs (38) zum Zuleiten von Spülwasser in den Sanitärartikel;
- ein Befestigungsmittel zur Aufnahme und Befestigung eines Abflussrohrs (27) zum Ableiten von Abwasser aus dem Sanitärartikel am Montagerahmen (28); und
- mindestens eine erste und eine zweite Befestigungseinrichtung (41) zur Befestigung des Sanitärartikels am Montagerahmen (28);
wobei die Spülrohr-Aufnahme, das Befestigungsmittel sowie die erste und zweite Befestigungseinrichtung (41) einen Zwischenraum (Z) definieren,
**dadurch gekennzeichnet, dass**
eine Elektrodose (1) zur Stromversorgung des Sanitärartikels im Zwischenraum (Z) angeordnet ist,
wobei die Elektrodose (1) ein Gehäuse (3) mit einem Innenraum (4), der über eine Frontöffnung (16) zugänglich ist, und eine im Innenraum (4) liegende Trennwand (5), welche den Innenraum (4) in einen ersten Raumbereich (6) und einen zweiten Raumbereich (7) aufteilt, umfasst,
wobei in der Trennwand (5) mindestens ein elektrisches Kontaktelement (8) angeordnet ist, welches eine zum ersten Raumbereich (6) zugewandte erste Anschlussstelle (9) zum Anschluss an eine gebäudeseitige Elektroinstallation, wie eine Starkstrominstallation und/oder eine Gebäudeleittechnikinstallation, aufweist, und welches eine zum zweiten Raumbereich (7) zugewandte zweite Anschlussstelle (10) aufweist, wobei im zweiten Raumbereich (7) weiterhin mindestens ein Elektroelement (11) angeordnet ist, welches Elektroelement (11) eine elektrische Schnittstelle (12) aufweist, die mit der zweiten Anschlussstelle (10) des elektrischen Kontaktelementes (8) über eine Steckverbindung elektrisch verbindbar ist, und welches Elektroelement (11) über ein Leiterelement (13) mit einem Sanitärartikel verbindbar ist.

2. Sanitärinstallation (2) nach Anspruch 1, **dadurch gekennzeichnet, dass** das Kontaktelement (8) in einer Durchgangsöffnung (29) in der Trennwand (5) fest gelagert ist; oder dass das Kontaktelement (8) einen integralen Bestandteil der Trennwand (5) bildet.

3. Sanitärinstallation (2) nach Anspruch 1 oder 2, **dadurch gekennzeichnet, dass** die zweite Anschlussstelle (10) Anschlussbuchsen (14) umfasst und dass die Schnittstelle (12) Anschlussstifte (15) aufweist, welche in die Anschlussbuchsen (14) einschiebbar sind; oder dass die zweite Anschlussstelle (10) und die Schnittstelle (12) als Flachkontakte ausgebildet sind, wobei vorzugsweise einer der Flachkontakte durch ein gefedertes Kontaktelement bereitgestellt wird.

4. Sanitärinstallation (2) nach einem der vorhergehenden Ansprüche, **dadurch gekennzeichnet, dass** die Trennwand (5) in den Innenraum (4) einsetzbar ist; oder dass die Trennwand (5) einen integralen Bestandteil des Gehäuses (3) ist.

5. Sanitärinstallation (2) nach einem der vorhergehenden Ansprüche, **dadurch gekennzeichnet, dass** die Trennwand (5) durch einen über die Frontöffnung (16) in den Innenraum (4) einsetzbaren Einsatz bereitgestellt wird.

6. Sanitärinstallation (2) nach Anspruch 5, **dadurch gekennzeichnet, dass** der Einsatz mindestens einen Distanzhalteabschnitt (18) aufweist, welcher von der Trennwand (5) absteht, wobei der Distanzhalteabschnitt (18) mit einer gegenüber der Frontöffnung (16) liegenden Wandung (19) des Gehäuses (3) in Kontakt kommt, und wobei zwischen der Wandung (19) des Gehäuses (3) und der Trennwand (5) der besagte erste Raumbereich (6) geschaffen wird, und wobei zwischen der Trennwand (5) und der Frontöffnung der besagte zweite Raumbereich (7) geschaffen wird.

7. Sanitärinstallation (2) nach Anspruch 6, **dadurch gekennzeichnet, dass** der Distanzhalteabschnitt (18) die Struktur einer Wandung aufweist, welche Wandung, vorzugsweise mindestens, einen Durchbruch (20) aufweist, der mit mindestens einer Durchgangsöffnung (21) am Gehäuse (3) passend angeordnet ist.

8. Sanitärinstallation (2) nach einem der vorhergehenden Ansprüche 5 bis 7, **dadurch gekennzeichnet, dass** von der Trennwand (5) in Richtung des zweiten Raumbereichs (7) eine weitere Wandung (22) absteht, welche die Trennwand (5) mindestens teilweise umgibt.

9. Sanitärinstallation (2) nach einem der vorhergehenden Ansprüche 7 und 8, **dadurch gekennzeichnet, dass** an der ersten Anschlussstelle (9) ein Kabel vorgesehen ist, welches mit der ersten Anschlussstelle (9) in fester elektrischer Verbindung steht und über die mindestens eine Durchgangsöffnung (21) aus dem Gehäuse (3) hinausgeführt wird und ausserhalb des Gehäuses (3) mit der gebäudeseitige Elektroinstallation verbindbar ist.

10. Sanitärinstallation (2) nach einem der vorhergehenden Ansprüche, **dadurch gekennzeichnet, dass** das Elektroelement (11) ein Netzteil, ein Transformator, eine Batterie, ein Kommunikationselement, oder ein mit der Gebäudeleittechnik zusammenarbeitendes Element ist.

11. Sanitärinstallation (2) nach einem der vorhergehenden Ansprüche, **dadurch gekennzeichnet, dass** das Gehäuse (3) aussenseitig mindestens ein Rastelement (24) aufweist, mit welchem das Gehäuse (3) mit der Sanitärinstallation, insbesondere mit dem Montagerahmen (28) verbindbar ist.

12. Sanitärinstallation (2) nach einem der vorhergehenden Ansprüche, **dadurch gekennzeichnet, dass** das Gehäuse (3) an einer ihrer Seitenwände (25) eine Einbuchtung (26) aufweist, die derart ausgebildet ist, dass Raum für die Durchführung eines Abflussrohrs (27) der Sanitärinstallation geschaffen wird.

13. Sanitärinstallation (2) nach Anspruch 12, **dadurch gekennzeichnet, dass** die Einbuchtung (26) mittig zwischen zwei gegenüberliegenden Seitenwänden (25) des Gehäuses (3) angeordnet ist und/oder dass sich die Einbuchtung in den Innenraum (4) hineinerstreckt und den Innenraum (4) verkleinert.

14. Sanitärinstallation (2) nach einem der vorhergehenden Ansprüche, **dadurch gekennzeichnet, dass** die Elektrodose (1) rechtwinklig auf die Frontöffnung (16) gesehen eine Breite (B) aufweist, die mindestens 1.5 mal grösser als die Höhe (H) ist; und/oder dass die Elektrodose (1) eine Tiefe (T) aufweist, die kleiner als die Breite (B) und/oder grösser als die Höhe (H) ist.

15. Sanitärinstallation (2) nach einem der vorhergehenden Ansprüche, **dadurch gekennzeichnet, dass** der Zwischenraum (Z) durch zwei senkrechte Ebenen, welche senkrecht durch die erste beziehungsweise zweite Befestigungseinrichtung (41) verlaufen, und durch zwei horizontale Ebenen, welche horizontal durch die Spülrohr-Aufnahme beziehungsweise das Befestigungsmittel verlaufen, definiert ist, wobei der Zwischenraum (Z) vorzugsweise derart angeordnet ist, dass er im Einbauzustand des Montagerahmens (28) frei zugänglich ist, und wobei der Zwischenraum (Z) im Einbauzustand, im Falle eines mit dem Montagerahmen (28) verbundenen Sanitärartikels, vorzugsweise durch den Sanitärartikel überdeckt wird.

16. Sanitärinstallation (2) nach einem der vorhergehenden Ansprüche, wenn dabei vom Anspruch 12 abhängig, **dadurch gekennzeichnet, dass** das Befestigungsmittel eine Rohrschelle ist, welche mit dem Montagerahmen (28) in Verbindung steht; und dass das Abflussrohr (27) sich durch die Einbuchtung (26) hindurch erstreckt.

## Claims

1. Sanitary installation (2) for a sanitary article, in particular a WC or shower WC, comprising:
- a mounting frame (28);
- a flush pipe receptacle for receiving a flush pipe (38) for supplying flush water to the sanitary article;
- a mounting means for receiving and securing a drain pipe (27) for draining waste water from the sanitary article to the mounting frame (28); and
- at least a first and a second fastening structure (41) for fastening the sanitary article to the mounting frame (28);
wherein the flush pipe receptacle, the fastening means, and the first and second fastening means (41) define an intermediate space (Z),
**characterized in that**
an electrical box (1) for supplying power to the sanitary article is disposed in the intermediate space (Z),
wherein the electrical box (1) comprises a housing (3) with an interior space (4), which is accessible via a front opening (16), and a partition wall (5) lying in the interior space (4), which divides the interior space (4) into a first space region (6) and a second space region (7), and
wherein at least one electrical contact element (8) being arranged in the partition wall (5), which contact element has a first connection point (9) facing the first space region (6) for connection to an electrical installation on the building side, such as a high-voltage installation and/or a building management system installation, and which contact element has a second connection point (10) facing the second space region (7), and
wherein at least one electrical element (11) is further arranged in the second space region (7), which electrical element (11) has an electrical interface (12) which can be electrically connected to the second connection point (10) of the electrical contact element (8) via a plug connection, and which electrical element (11) can be connected to a sanitary article via a conductor element (13).

2. Sanitary installation (2) according to claim 1, **characterized in that** the contact element (8) is fixedly mounted in a through opening (29) in the partition wall (5); or **in that** the contact element (8) forms an integral part of the partition wall (5).

3. Sanitary installation (2) according to claim 1 or 2, **characterized in that** the second connection point (10) comprises connection sockets (14) and **in that** the interface (12) has connection pins (15) which can be inserted into the connection sockets (14); or **in that** the second connection point (10) and the interface (12) are designed as flat contacts, preferably one of the flat contacts being provided by a springloaded contact element.

4. Sanitary installation (2) according to one of the preceding claims, **characterized in that** the partition wall (5) can be inserted into the interior space (4); or **in that** the partition wall (5) is an integral part of the housing (3).

5. Sanitary installation (2) according to one of the preceding claims, **characterized in that** the partition wall (5) is provided by an insert that is insertable into the interior space (4) via the front opening (16).

6. Sanitary installation (2) according to claim 5, **characterized in that** said insert comprises at least one spacer portion (18) projecting from said partition wall (5), wherein said spacer portion (18) coming into contact with a wall (19) of said housing (3) opposite said front opening (16), and wherein said first space region (6) is provided between the wall (19) of the housing (3) and the partition wall (5), and wherein said second space region (7) is provided between the partition wall (5) and the front opening.

7. Sanitary installation (2) according to claim 6, **characterized in that** said spacer portion (18) has the structure of a wall, said wall preferably having at least one aperture (20) matingly arranged with at least one through opening (21) on said housing (3).

8. Sanitary installation (2) according to one of the preceding claims 5 to 7, **characterized in that** a further wall (22) projects from the partition wall (5) in the direction of the second room region (7) and at least partially surrounds the partition wall (5).

9. Sanitary installation (2) according to one of the preceding claims 7 and 8, **characterized in that** a cable is provided at the first connection point (9), which cable is in fixed electrical connection with the first connection point (9) and is led out of the housing (3) via the through opening (21) and can be connected outside the housing (3) to the electrical installation on the building side.

10. Sanitary installation (2) according to one of the preceding claims, **characterized in that** the electrical element (11) is a power supply unit, a transformer, a battery, a communication element, or an element cooperating with the building management system.

11. Sanitary installation (2) according to one of the preceding claims, **characterized in that** the housing (3) has on the outside at least one latching element (24), by means of which the housing (3) can be connected to the sanitary installation, in particular to the mounting frame (28).

12. Sanitary installation (2) according to one of the preceding claims, **characterized in that** the housing (3) has on one of its side walls (25) an indentation (26) which is designed in such a way that space is created for the passage of a drain pipe (27) of the sanitary installation.

13. Sanitary installation (2) according to claim 12, **characterized in that** the indentation (26) is arranged centrally between two opposite side walls (25) of the housing (3) and/or **in that** the indentation extends into the interior space (4) and reduces the interior space (4).

14. Sanitary installation (2) according to one of the preceding claims, **characterized in that** the electrical box (1), viewed at right angles to the front opening (16), has a width (B) which is at least 1.5 times greater than the height (H); and/or that the electrical box (1) has a depth (T) which is smaller than the width (B) and/or greater than the height (H).

15. Sanitary installation (2) according to one of the preceding claims, **characterized in that** the intermediate space (Z) is defined by two vertical planes which run vertically through the first and second fastening means (41), respectively, and by two horizontal planes which run horizontally through the flush pipe receptacle and the fastening means, respectively, wherein the intermediate space (Z) preferably being arranged in such a way that it is freely accessible in the installed state of the mounting frame (28), and the intermediate space (Z) in the installed state, in the case of a sanitary article connected to the mounting frame, preferably being covered by the sanitary article.

16. Sanitary installation (2) according to one of the preceding claims when being dependent from claim 12, **characterized in that** the fastening means is a pipe clamp which is connected to the mounting frame (28); and that the electrical box has an indentation (26) through which the drain pipe (27) extends.

## Revendications

1. Une installation sanitaire (2) pour un article sanitaire, en particulier un WC ou un WC à bidet comprenant:
- un cadre de montage (28);
- un logement de tuyau de rinçage pour recevoir un tuyau de rinçage (38) pour alimenter en eau de rinçage l'article sanitaire ;
- un moyen de fixation pour recevoir et fixer un tuyau d'évacuation (27), pour évacuer les eaux usées hors de l'article sanitaire, sur le cadre de montage (28) ; et
- au moins un premier et un deuxième dispositif de fixation (41) pour fixer l'article sanitaire au cadre de montage (28) ;
dans lequel le logement de tuyau de rinçage, le moyen de fixation (40) ainsi que les premier et deuxième dispositifs de fixation (41) définissent un espace intermédiaire (Z),
**caractérisée en ce qu'**une prise électrique (1) est agencée pour l'alimentation en électricité de l'article sanitaire dans l'espace intermédiaire (Z),
dans laquelle la prise électrique (1) comprend un boîtier (3) avec un espace intérieur (4), qui est accessible par une ouverture frontale (16), une paroi de séparation (5) située dans l'espace intérieur (4), qui divise l'espace intérieur (4) dans une première zone d'espace (6) et une deuxième zone d'espace (7),
dans laquelle au moins un élément de contact électrique (8) est disposé dans la paroi de séparation (5), qui présente un premier point de connexion (9) tournée vers la première zone d'espace (6) pour la connexion à une installation électrique du côté de la construction, tel qu'une installation à haute tension et / ou une installation de commande de bâtiment, et qui présente un deuxième point de connexion (10) faisant face à la deuxième zone d'espace (7), dans laquelle en outre au moins un élément électrique (11) est agencé dans la deuxième zone d'espace (7), lequel élément électrique (11) présente une interface électrique (12), qui peut être connectée électriquement au deuxième point de connexion (10) de l'élément de contact électrique (8) via un connecteur, et lequel élément électrique (11) peut être connecté à un article sanitaire via un élément conducteur (13).

2. Installation sanitaire (2) selon la revendication 1, **caractérisée en ce que** l'élément de contact (8) est monté de manière fixe dans une ouverture traversante (29) de la paroi de séparation (5); ou que l'élément de contact (8) fait partie intégrante de la paroi de séparation (5).

3. Installation sanitaire (2) selon la revendication 1 ou 2, **caractérisée en ce que** le deuxième point de connexion (10) comprend des douilles de connexion (14) et que l'interface (12) comporte des broches de connexion (15) qui peuvent être insérées dans les douilles de connexion (14); ou que le deuxième point de connexion (10) et l'interface (12) sont réalisés sous forme de contacts plats, l'un des contacts plats étant de préférence réalisé par un élément de contact à ressort.

4. Installation sanitaire (2) selon l'une des revendications précédentes, **caractérisée en ce que** la paroi de séparation (5) peut être insérée dans l'espace intérieur (4); ou que la paroi de séparation (5) fait partie intégrante du boîtier (3).

5. Installation sanitaire (2) selon l'une des revendications précédentes, **caractérisée en ce que** la paroi de séparation (5) est réalisée par un insert qui peut être inséré dans l'espace intérieur (4) via l'ouverture frontale (16).

6. Installation sanitaire (2) selon la revendication 5, **caractérisée en ce que** l'insert présente au moins une section d'entretoise (18) qui fait saillie de la paroi de séparation (5), dans laquelle la section d'entretoise (18) vient en contact avec une paroi (19) opposée à l'ouverture frontale (16) du boîtier (3), et dans laquelle ladite première zone d'espace (6) est créée entre la paroi (19) du boîtier (3) et la paroi de séparation (5), et dans laquelle la deuxième zone d'espace (7) est créée entre la paroi de séparation (5) et ladite ouverture frontale.

7. Installation sanitaire (2) selon la revendication 6, **caractérisée en ce que** la section d'entretoise (18) présente la structure d'une paroi, laquelle paroi présente de préférence au moins une percée (20) qui est agencée complémentairement avec au moins une ouverture traversante (21) sur le boîtier (3).

8. Installation sanitaire (2) selon l'une des revendications précédentes 5 à 7, **caractérisée en ce qu'**une autre paroi (22), qui entoure au moins partiellement la paroi de séparation (5), dépasse de la paroi de séparation (5) en direction de la deuxième zone d'espace (7).

9. Installation sanitaire (2) selon l'une des revendications précédentes 7 et 8, **caractérisée en ce qu'**un câble est prévu au niveau du premier point de connexion (9), qui est en connexion électrique permanente avec le premier point de connexion (9) et qui est guidé hors du boîtier (3) via l'au moins une ouverture de passage (21) et peut être connecté à l'installation électrique du côté du bâtiment en dehors du boitier (3).

10. Installation sanitaire (2) selon l'une des revendications précédentes, **caractérisée en ce que** l'élément électrique (11) est un bloc d'alimentation, un transformateur, une batterie, un élément de communication ou un élément coopérant avec l'installation de commande de bâtiment.

11. Installation sanitaire (2) selon l'une des revendications précédentes, **caractérisée en ce que** le boîtier (3) présente à l'extérieur au moins un élément d'encliquetage (24) avec lequel le boîtier (3) peut être connecté à l'installation sanitaire, en particulier à un cadre de montage (28).

12. Installation sanitaire (2) selon l'une des revendications précédentes, **caractérisée en ce que** le boîtier (3) présente un renfoncement (26) sur l'une de ses parois latérales (25) qui est conçu de telle sorte qu'il un espace pour le passage d'un tuyau d'évacuation (27) de l'installation sanitaire est créé.

13. Installation sanitaire (2) selon la revendication 12, **caractérisée en ce que** le renfoncement (26) est disposée centralement entre deux parois latérales opposées (25) du boîtier (2) et/ou **en ce que** le renfoncement s'étend dans l'espace intérieur (4) et réduit l'espace intérieur (4).

14. Installation sanitaire (2) selon l'une des revendications précédentes, **caractérisée en ce que** la prise électrique (1), vue perpendiculairement à l'ouverture frontale (16), a une largeur (B) qui est au moins 1,5 fois supérieure à la hauteur (H) ; et/ou que la prise électrique (1) a une profondeur (T) qui est inférieure à la largeur (B) et/ou supérieure à la hauteur (H).

15. Installation sanitaire (2) selon l'une des revendications précédentes, **caractérisée en ce que** l'espace intermédiaire (Z) est défini par deux plans verticaux, qui traversent verticalement le premier et le deuxième dispositif de fixation (41), et par deux plans horizontaux, qui traversent horizontalement le logement du tuyau de rinçage respectivement le moyen de fixation, dans laquelle l'espace intermédiaire (Z) est de préférence disposé de telle sorte qu'il est librement accessible à l'état installé du cadre de montage (28), et dans laquelle l'espace intermédiaire (Z), dans le cas de d'un article sanitaire relié au cadre de montage (28), est de préférence couvert par l'article sanitaire.

16. Installation sanitaire (2) selon l'une des revendications précédentes, dans le cas où elles dépendent de la revendication 12, **caractérisée en ce que** le moyen de fixation est un collier de serrage, qui est relié au cadre de montage (28); et que le tuyau d'évacuation (27) s'étend à travers le renfoncement (26).
